# EUROPÄISCHE PATENTANMELDUNG

(11) **EP 3 974 733 A1**
(43) Veröffentlichungstag der Anmeldung: **30.03.2022**
(21) Anmeldenummer: 21194018.4
(22) Anmeldetag: 31.08.2021
(51) Int. Cl.: F24C 15/10, F24C 7/08

(54) **KOCHFELD UND ANORDNUNG EINES KOCHFELDS AN EINER ARBEITSPLATTE**

(30) Priorität: 28.09.2020 DE 102020212171
(71) Anmelder: E.G.O. Elektro-Gerätebau GmbH, 75038 Oberderdingen (DE)
(72) Erfinder: Eiselt, Jürgen, 89257 Illertissen (DE); Frank, Marcus, 75056 Sulzfeld (DE); Lehner, Marius, 75417 Mühlacker (DE); Münzner, Frank, 56479 Willingen (DE); Richter, Andreas, 74211 Leingarten (DE); Schaumann, Uwe, 75038 Oberderdingen (DE); Wein, Siegbert, 76703 Kraichtal (DE); Zarcone, Carmelo, 75038 Oberderdingen (DE)
(74) Vertreter: Patentanwälte Ruff, Wilhelm, Beier, Dauster & Partner mbB

(57) **Zusammenfassung**

Ein Kochfeld weist eine Kochfeldplatte mit einem umlaufenden Außenrand und darunter mehrere Heizeinrichtungen sowie ein Kochfeldgehäuse mit einer Kochfeldsteuerung, einer Leistungsversorgung und den Heizeinrichtungen darin, auf. An dem Außenrand der Kochfeldplatte ist ein Rahmen vorgesehen, der zur Verbindung mit einer Arbeitsplatte ausgebildet ist bei Anordnung des Kochfelds in der Arbeitsplatte. An dem Rahmen sind mehrere Gewichtssensoren angeordnet, vorzugsweise Dehnmesssensoren, die zur Messung einer Veränderung der Gewichtsbelastung auf dem Kochfeld bzw. auf der Kochfeldplatte ausgebildet sind.

## Beschreibung

Die Erfindung betrifft ein Kochfeld sowie eine Anordnung eines solchen Kochfelds an einer Arbeitsplatte.

Aus der DE 10 2016 221 546 A1 ist ein Kochfeld bekannt, das über einem Ausschnitt an einer Arbeitsplatte angeordnet ist. Das Kochfeld weist eine Kochfeldplatte aus Glaskeramik auf, die einen Randbereich des Ausschnitts ein Stück überlappt in einem Überstandsbereich. In diesem Überstandsbereich ist zwischen einer Unterseite der Kochfeldplatte und einer Oberseite der Arbeitsplatte ein länglicher kapazitiver Sensor angeordnet. Der Sensor ist dazu eingerichtet, Sensordaten zu erfassen, die das Gewicht der auf der Oberseite der Arbeitsplatte aufliegenden Kochfeldplatte anzeigen. Somit kann eine Veränderung einer Gewichtsbelastung auf der Kochfeldplatte erkannt werden. Damit können beispielsweise automatische Kochprogramme gesteuert werden.

Aus der EP 3 355 663 A1 ist ein weiteres ähnliches Kochfeld bekannt, bei dem mittels Gewichtssensoren eine Änderung der Gewichtsbelastung auf der Kochfeldplatte erkannt werden kann, also eine Wiegefunktion vorhanden ist. Diese Gewichtssensoren sind an der Unterseite eines Kochfeldgehäuses vorgesehen, das an der Unterseite der Kochfeldplatte befestigt ist.

### AUFGABE UND LÖSUNG

Der Erfindung liegt die Aufgabe zugrunde, ein eingangs genanntes Kochfeld sowie eine eingangs genannte Anordnung eines solchen Kochfelds an einer Arbeitsplatte zu schaffen, mit denen Probleme des Standes der Technik gelöst werden können und es insbesondere möglich ist, einen Aufbau des Kochfelds einfach und konstruktionssicher auszugestalten sowie ein solches Kochfeld einfach und praxistauglich an einer Arbeitsplatte anzuordnen.

Gelöst wird diese Aufgabe durch ein Kochfeld mit den Merkmalen des Anspruchs 1 sowie durch eine Anordnung eines solchen Kochfelds an einer Arbeitsplatte mit den Merkmalen des Anspruchs 10. Vorteilhafte sowie bevorzugte Ausgestaltungen der Erfindung sind Gegenstand der weiteren Ansprüche und werden im Folgenden näher erläutert. Dabei werden manche der Merkmale nur für das Kochfeld oder nur für die Anordnung erläutert. Sie sollen jedoch unabhängig davon sowohl für ein Kochfeld als auch für die Anordnung selbständig und unabhängig voneinander gelten können. Der Wortlaut der Ansprüche wird durch ausdrückliche Bezugnahme zum Inhalt der Beschreibung gemacht.

Das Kochfeld weist eine Kochfeldplatte mit einem umlaufenden Außenrand auf, wobei vorteilhaft die Kochfeldplatte wie üblich rechteckige Form aufweist. Der Außenrand weist dann auch rechteckige Form auf. Unter der Kochfeldplatte sind mehrere Heizeinrichtungen vorhanden, deren Ausgestaltung beliebig sein kann. Es können unter Umständen auch Gasbrenner sein, die dann auf bekannte Art und Weise zumindest teilweise über die Kochfeldplatte nach oben hinausragen. Vorteilhaft können Strahlungsheizeinrichtungen oder Induktionsheizspulen vorgesehen sein, die an eine Unterseite der Kochfeldplatte angelegt sind. Des Weiteren befindet sich ein Kochfeldgehäuse unter der Kochfeldplatte bzw. liegt an der Unterseite an, in dem eine Kochfeldsteuerung und eine Leistungsversorgung für die Kochfeldsteuerung und die Heizeinrichtungen angeordnet sind. Vorteilhaft kann das Kochfeldgehäuse auch die Heizeinrichtungen enthalten bzw. diese nach unten abdecken, wie es an sich bekannt ist. An dem Außenrand der Kochfeldplatte ist ein Rahmen vorgesehen, vorteilhaft umlaufend, wobei der Rahmen zur Verbindung mit einer Arbeitsplatte ausgebildet ist, wenn das Kochfeld an bzw. in der Arbeitsplatte angeordnet wird. Bevorzugt weist der Rahmen die Form des Außenrands der Kochfeldplatte auf, besonders bevorzugt rechteckig wie vorgenannt. Der Rahmen kann mit der Arbeitsplatte verklebt oder verschraubt werden als Beispiel für eine Verbindung.

Erfindungsgemäß sind an dem Rahmen selbst mehrere Gewichtssensoren angeordnet. Vorteilhaft sind diese Gewichtssensoren als Dehnmesssensoren ausgebildet, alternativ als Drucksensoren. Diese Gewichtssensoren sind dazu ausgebildet, eine Veränderung der Gewichtsbelastung auf dem Kochfeld bzw. auf der Kochfeldplatte zu messen. So kann die vorgenannte vorteilhafte Erfassung einer Veränderung einer Gewichtsbelastung auf dem Kochfeld erfolgen als Wiegefunktion, um damit verschiedene, an sich bekannte Funktionen zu ermöglichen. Ein solches Kochfeld kann einerseits direkt als Waage dienen, andererseits können eingangs genannte automatische Kochprogramme odgl. auf bekannte Art und Weise damit ablaufen.

Somit ist es mit der Erfindung möglich, die Gewichtssensoren nicht am Kochfeldgehäuse zu befestigen, was eine einfachere Anordnung relativ zur Arbeitsplatte ermöglichen kann. Des Weiteren kann der Rahmen vorteilhaft die einzige Verbindung zwischen Kochfeldplatte bzw. Kochfeld und Arbeitsplatte sein, wodurch die Verfälschung von Messergebnissen bei der Gewichtsmessung geringer ist und diese somit exakter ablaufen kann. Außerdem kann eine Integration oder eine Anbringung der Gewichtssensoren an dem Rahmen die Montage des Kochfelds selbst sowie dessen Montage bei der Anordnung an der Arbeitsplatte vereinfachen. Für den Fall, dass der Rahmen die einzige Verbindung zwischen Kochfeldplatte bzw. Kochfeld und Arbeitsplatte ist, kann eine Dichtfunktion des Rahmens verbessert sein. So kann keine Flüssigkeit zwischen Kochfeldplatte und Arbeitsplatte eindringen, insbesondere in einen Ausschnitt in der Arbeitsplatte, in dem das Kochfeldgehäuse im Wesentlichen ist. Einer oder mehrere Gewichtssensoren können dazu ausgebildet sein, in einer ersten Ausgestaltung der Erfindung eine Druckbelastung des Rahmens gegenüber der Arbeitsplatte entsprechend einer Gewichtsbelastung zu erfassen. Änderungen dieser Druckbelastung entsprechen dann Änderungen der Gewichtsbelastung auf der Kochfeldplatte, und damit kann ein Gewicht auf der Kochfeldplatte gemessen werden.

In einer zweiten Ausgestaltung der Erfindung können die Gewichtssensoren eine Formveränderung bzw. Verbiegung an dem Rahmen als Maß für eine Gewichtsbelastung und somit auch für eine Veränderung der Gewichtsbelastung erfassen. Dies ist besonders dann vorteilhaft, wenn der Rahmen dichtend zwischen Kochfeldplatte und Arbeitsplatte verläuft bzw. wenn er die Kochfeldplatte gegenüber der Arbeitsplatte abdichtet.

In Ausbildung der Erfindung kann das Kochfeld insgesamt mindestens drei oder vier Gewichtssensoren aufweisen. Vorteilhaft sind es genau vier. Wenn die Kochfeldplatte eine mehreckige Form aufweist, kann pro Längsseite des Außenrands der Kochfeldplatte genau ein einziger Gewichtssensor vorgesehen sein. Im vorteilhaften Fall einer rechteckigen Kochfeldplatte sind dies dann vier Gewichtssensoren.

In weiterer Ausbildung der Erfindung können mindestens drei oder mindestens vier Gewichtssensoren, vorzugsweise alle Gewichtssensoren, relativ nahe an einem Eckbereich der Kochfeldplatte angeordnet sein. Sie können einen Abstand von weniger als 10 cm zu einer Ecke der Kochfeldplatte aufweisen, vorzugsweise von weniger als 5 cm. Insbesondere können die Gewichtssensoren genau in den Ecken der Kochfeldplatte bzw. in den Ecken des entsprechenden Rahmens angeordnet sein. Alternativ können Gewichtssensoren, insbesondere alle Gewichtssensoren, in einem jeweiligen Mittelbereich der Längsseiten des Außenrands vorgesehen sein, insbesondere genau in der Mitte.

Der Rahmen für das Kochfeld kann in vorteilhafter Ausbildung der Erfindung im Wesentlichen aus Metall bestehen und/oder Rahmenteile aus Metall aufweisen, beispielsweise Edelstahl oder Aluminium. Der Rahmen bzw. die Rahmenteile verlaufen bevorzugt parallel zum Außenrand der Kochfeldplatte, insbesondere sind die Rahmenteile bezüglich der Ausgestaltung bzw. Form identisch, nur eben nicht alle gleich lang.

Bevorzugt ist der Rahmen bzw. sind Rahmenteile für den Rahmen als Profile ausgebildet. Derartige Profile können mindestens eine Abwinklung aufweisen, vorzugsweise mindestens zwei Abwinklungen. Diese Profile sind dann länglich und verlaufen parallel zu dem Außenrand der Kochfeldplatte. Die Abdeckung oder Überdeckung des Außenrands mit jeweils einem Rahmen bzw. Rahmenteil ist vorteilhaft überall gleich. Die vorgenannten Abwinklungen können einen Winkel zwischen 80° und 100° aufweisen. Vorteilhaft kann ein Winkel 90° betragen, so dass ein Profil mindestens einmal rechtwinklig abgewinkelt ist, vorteilhaft mehrfach rechtwinklig abgewinkelt sein kann.

Besonders bevorzugt verläuft entlang jeder Seite des Außenrands der Kochfeldplatte ein Rahmenteil des Rahmens. Dabei kann pro Seite des Außenrands jeweils nur ein einziges durchgehendes Rahmenteil vorgesehen sein. Eine rechteckige Kochfeldplatte weist somit vier Rahmenteile auf, die vorteilhaft identisches Profil aufweisen und beispielsweise zur Vereinfachung der Herstellung aus einem einzigen Längsprofil herausgearbeitet sind.

In Eckbereichen der Kochfeldplatte kann der Rahmen durchgängig sein bzw. sind Rahmenteile vorteilhaft miteinander verbunden. Dabei sollten sie dichtend miteinander verbunden sein und/oder mechanisch fest miteinander verbunden sein. So erhält man einen stabilen Rahmen, der auch dicht sein kann, was vorteilhaft ist, um das Eintreten von Flüssigkeit auch in den Eckbereichen zu verhindern.

In bestimmten Ausgestaltungen der Erfindung kann es vorteilhaft sein, wenn die Rahmenteile zwar bis zu den Eckbereichen verlaufen, dann aber nicht mechanisch fest miteinander verbunden sind. So ist die Erfassung einer Änderung einer Gewichtsbelastung auf der Kochfeldplatte an dem mindestens einen Gewichtssensor eines Rahmenteils besser und unabhängiger möglich. Dann kann in den Eckbereichen vorteilhaft immer noch eine Abdichtung zwischen einzelnen Rahmenteilen vorgesehen sein. Dies bietet sich vor allem dann an, wenn die Gewichtssensoren nicht nahe zu oder in den Eckbereichen angeordnet sind, sondern in einem Mittelbereich oder in einer Mitte der Rahmenteile.

In vorteilhafter Ausgestaltung der Erfindung ist mindestens ein Gewichtssensor als Dehnmessstreifen ausgebildet, vorzugsweise alle Gewichtssensoren, wobei sie insbesondere gleich bzw. identisch ausgebildet sein können. Dieser mindestens eine Gewichtssensor ist dann an einem Bereich des Rahmenteils angeordnet, der sich bei Änderung der Gewichtsbelastung, insbesondere bei Zunahme der Gewichtsbelastung, derart verformt bzw. durchbiegt, dass sich der Dehnmessstreifen verlängert. Diese Verlängerung kann dann wie bekannt erfasst werden und als Maß für die Änderung der Gewichtsbelastung herangezogen werden. Vorteilhaft sind alle Gewichtssensoren als Dehnmessstreifen ausgebildet und gleich bzw. gleichartig an dem Rahmen bzw. Rahmenteilen oder Rahmenschenkeln angeordnet, was die Berechnung der Veränderung der Gewichtsbelastung stark vereinfacht. Derartige Dehnmessstreifen arbeiten auch sehr genau bzw. sind hochsensibel.

In alternativer Ausgestaltung ist mindestens ein Gewichtssensor derart ausgebildet, dass er auf reinen Druck bzw. ausschließlich auf Druck misst, ist also eine Art Drucksensor. Dies kann vorteilhaft für alle Gewichtssensoren des Kochfelds gelten. Ein solcher Gewichtssensor kann beispielsweise in vertikaler Erstreckung zwischen einer Unterseite der Kochfeldplatte und dem Rahmen oder zwischen einer Oberseite der Arbeitsplatte und dem Rahmen angeordnet sein. Als weitere Möglichkeit kann er zwischen zwei beabstandeten Rahmenschenkeln angeordnet sein, die derart ausgebildet sind, dass sich ihr Abstand zueinander bei zunehmender Gewichtsbelastung auf dem Kochfeld bzw. auf der Kochfeldplatte verändert, insbesondere bei Zunahme der Gewichtsbelastung verringert und bei Abnahme der Gewichtsbelastung vergrößert. Daraus kann dann auch die Veränderung der Gewichtsbelastung berechnet werden.

In nochmals weiterer Ausgestaltung der Erfindung wird ein Dehnmessstreifen als Gewichtssensor nicht direkt auf den Rahmen oder auf einen Rahmenteil aufgebracht, sondern erst direkt auf einen Sensorträger. Dieser Sensorträger selbst wird dann derart an dem Rahmen befestigt, dass er sich wie vorbeschrieben bei einer Veränderung der Gewichtsbelastung auf dem Kochfeld verformt, insbesondere verlängert, und diese Verformung dann auch den Dehnmessstreifen betrifft und als solche erfasst werden kann. Diese Ausgestaltung ermöglicht eine flexible Anzahl und Positionierung der Sensoren. Dazu kann ein Sensorträger mit einem Dehnmessstreifen darauf beispielsweise flächig auf den Rahmen oder ein Rahmenteil bzw. einen Rahmenschenkel aufgeklebt werden oder an einem entsprechenden Ausschnitt oder einer Aufnahme eingeschoben und mit diesem entsprechend verformt werden bei Gewichtsänderung. Ein elektrischer Anschluss solcher Dehnmessstreifen, wie im Übrigen auch von Drucksensoren, kann auf bekannte Art und Weise erfolgen.

Um ein Kochfeld erfindungsgemäß an einer Arbeitsplatte anzuordnen, weist die Arbeitsplatte einen Ausschnitt auf, der mindestens so groß sein sollte wie das Kochfeldgehäuse. Das Kochfeld wird dabei so an der Arbeitsplatte angeordnet, dass das Kochfeldgehäuse zumindest teilweise in den Ausschnitt hineinragt. Vorteilhaft weist es in horizontaler Richtung einen Abstand von mindestens 0,5 cm oder mindestens 2 cm zu dem Rand des Ausschnitts auf. Der Rahmen befindet sich dabei zwischen der Kochfeldplatte und der Arbeitsplatte bzw. er verläuft zwischen Kochfeldplatte und Arbeitsplatte derart, dass die Kochfeldplatte einen Abstand von mindestens 1 mm zu der Arbeitsplatte aufweist. Vorteilhaft ist der Rahmen dabei bereits bei Herstellung des Kochfelds fest an der Kochfeldplatte befestigt, insbesondere angeklebt, so dass der Rahmen Teil der Baueinheit des Kochfelds ist. Dann brauchen möglicherweise aufwändige Justierarbeiten zwischen Kochfeld bzw. Kochfeldplatte und Rahmen nicht mehr durchgeführt zu werden. Vorteilhaft wird das Kochfeld mit dem Rahmen an der Arbeitsplatte angelegt bzw. befestigt. Somit kann vorgesehen sein, dass das Kochfeld bzw. die Kochfeldplatte mittels des Rahmens fest mit der Arbeitsplatte verbunden ist, insbesondere daran angeklebt ist, und dennoch aufgrund der Bewegbarkeit bzw. Flexibilität des Rahmens in sich genügend Bewegungsfreiheit aufweist um die Wiegefunktion zu ermöglichen.

In einer ersten grundsätzlichen Ausgestaltung der Erfindung kann die Kochfeldplatte oberhalb einer Oberseite der Arbeitsplatte verlaufen und außen um den Ausschnitt herum über der Oberseite verlaufen. Die Kochfeldplatte ist dann sozusagen auf die Arbeitsplatte aufgesetzt. Der Rahmen ist dann mindestens bereichsweise unterhalb der Kochfeldplatte angeordnet, so dass er zwischen der Unterseite der Kochfeldplatte und der Oberseite der Arbeitsplatte verläuft. Dabei kann vorgesehen sein, dass die Gewichtssensoren in einem ersten Fall in vertikaler Richtung oberhalb der Oberseite der Arbeitsplatte und unterhalb der Unterseite der Kochfeldplatte angeordnet sind. Dies gilt vorteilhaft für sämtliche Gewichtssensoren. In einem zweiten Fall dazu können die Gewichtssensoren in vertikaler Richtung unterhalb der Unterseite der Kochfeldplatte und oberhalb oder innerhalb des Ausschnitts in der Arbeitsplatte angeordnet sein. Sie sind dann nicht mehr direkt über der Oberseite der Arbeitsplatte, sondern eben oberhalb oder innerhalb des Ausschnitts. Während sie im ersten Fall unter Umständen direkt die Gewichtsbelastung erfassen können oder auch eine Druckbelastung entsprechend der Gewichtsbelastung, erfassen sie im zweiten Fall vor allem eine Verbiegung des Rahmens bzw. eines Rahmenteils oder eines Rahmenschenkels entsprechend der Veränderung der Gewichtsbelastung. Ist der Rahmen vorteilhaft zumindest teilweise auf der Oberseite der Arbeitsplatte und somit außerhalb des Ausschnitts oder den Ausschnitt umgebend auf die Arbeitsplatte aufgelegt, kann aufgrund der größeren horizontalen Entfernung und längerer Hebelverhältnisse eine Durchbiegung am Rahmen größer sein, was die Messgenauigkeit für die Messung der Gewichtsbelastung verbessert.

Für das Kochfeldgehäuse gilt bei dieser Ausgestaltung der Erfindung, dass es entweder an der Unterseite der Kochfeldplatte befestigt ist, beispielsweise angeklebt ist oder an angeklebten Schienen befestigt ist, so dass es vollständig von der Kochfeldplatte getragen wird. Alternativ kann es an der Arbeitsplatte befestigt sein, beispielsweise seitlich mit einem Innenrand des Ausschnitts oder mit einer Unterseite der Arbeitsplatte verschraubt sein, so dass es mindestens teilweise von der Arbeitsplatte getragen wird. Dann ist es auch möglich, eine Entkopplung zwischen Kochfeldplatte und Kochfeldgehäuse und zumindest einigen der in dem Kochfeldgehäuse angeordneten Funktionseinheiten zu erreichen, um so eine Verbesserung der Messung der Gewichtsbelastung zu erreichen.

In einer zweiten grundsätzlichen Ausgestaltung der Erfindung ist die Fläche der Kochfeldplatte nicht größer als der Ausschnitt der Arbeitsplatte wie beim ersten Fall, sondern kleiner. Die Kochfeldplatte ist dabei innerhalb des Ausschnitts in der Arbeitsplatte angeordnet oder zumindest überlappt sie in der Projektion von oben nicht über die Oberseite der Arbeitsplatte, verläuft also in der Projektion von oben auch innerhalb des Ausschnitts. Eine Unterseite der Kochfeldplatte verläuft vorteilhaft unterhalb der Oberseite der Arbeitsplatte, wenn die Kochfeldplatte tatsächlich innerhalb des Ausschnitts angeordnet ist. Alternativ könnte sie auch über der Ebene der Oberseite der Arbeitsplatte verlaufen. Die Kochfeldplatte ist dann ausschließlich mittels des Rahmens an der Arbeitsplatte gehalten, da sie ansonsten ja sozusagen in den Ausschnitt hineinfallen würde. Für das Kochfeldgehäuse gilt das zuvor Gesagte, es kann entweder an der Unterseite der Kochfeldplatte befestigt sein oder an der Arbeitsplatte befestigt sein.

Der Rahmen umläuft dann die Kochfeldplatte vollständig bzw. überall, wobei deren Außenrand einen Abstand zu einem Innenrand des Ausschnitts aufweist. Dieser Abstand wird von dem Rahmen verschlossen, wodurch auch die eingangs genannte Dichtfunktion des Rahmens zwischen Kochfeldplatte und Arbeitsplatte erreicht wird.

In nochmals weiterer Ausgestaltung der Erfindung ist es möglich, dass der Rahmen die einzige Verbindung zwischen Kochfeldplatte und Arbeitsplatte ist, insbesondere die Kochfeldplatte damit an der Arbeitsplatte befestigt ist. Ein abstehender Rahmenschenkel des Rahmens kann so in den Ausschnitt hineinragen, dass das Kochfeldgehäuse zumindest teilweise daran befestigt sein kann, insbesondere auch zumindest teilweise getragen wird von dem Rahmen, insbesondere vollständig. Dieser Rahmenschenkel sollte dann direkt oder indirekt derart mit der Arbeitsplatte verbunden sein, dass das Gewicht des Kochfeldgehäuses samt möglicherweise davon getragener oder darin enthaltener Funktionseinheiten nicht auf den Gewichtssensor oder einen der Gewichtssensoren einwirkt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Draufsicht auf ein erfindungsgemäßes Kochfeld mit Kochfeldplatte und umlaufendem Rahmen,
- Fig. 2: eine Schnittdarstellung durch eine Anordnung eines Kochfelds ähnlich Fig. 1 an einer Arbeitsplatte mit Ausschnitt, wobei ein Rahmen im Wesentlichen unterhalb eines Außenrands der Kochfeldplatte verläuft,
- Fig. 3: eine Anordnung ähnlich Fig. 2 mit abgewandeltem Rahmen,
- Fig. 4: eine weitere Abwandlung ähnlich Fig. 2 mit nochmals anders ausgebildetem Rahmen, der vollständig unterhalb der Kochfeldplatte verläuft,
- Fig. 5: eine weitere Abwandlung einer Anordnung eines Kochfelds an einer Arbeitsplatte, wobei die Kochfeldplatte innerhalb des Ausschnitts in der Arbeitsplatte verläuft und mittels des Rahmens daran gehalten ist,
- Fig. 6: eine Abwandlung der Anordnung aus Fig. 5 mit veränderter Anordnung des Gewichtssensors am Rahmen und
- Fig. 7: eine nochmals weitere Abwandlung der Anordnung aus Fig. 5 mit zwischen zwei Rahmenschenkeln liegendem Gewichtssensor.

### DETAILLIERTE BESCHREIBUNG DER AUSFÜHRUNGSBEISPIELE

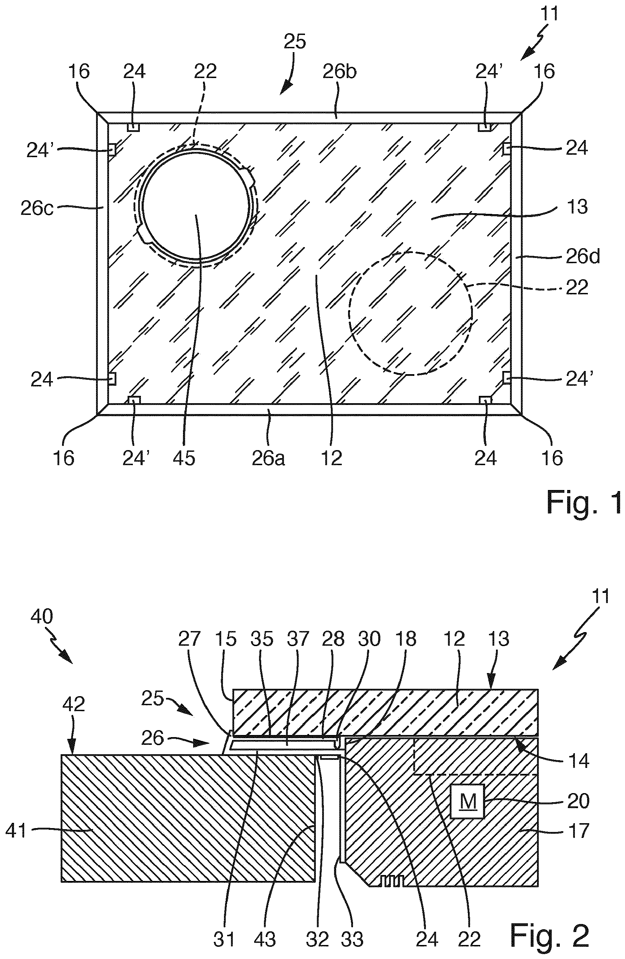

In der Fig. 1 ist eine Draufsicht auf ein erfindungsgemäßes Kochfeld 11 dargestellt, das eine Kochfeldplatte 12 aus Glaskeramik aufweist. Die Kochfeldplatte 12 weist eine Oberseite 13, eine Unterseite 14 und einen umlaufenden Außenrand 15 auf, wobei sie erkennbar rechteckig ausgebildet ist wie auch das gesamte Kochfeld 11. Das Kochfeld 11 weist ebenso wie die Kochfeldplatte 12 vier Ecken 16 auf. Entsprechend der Schnittdarstellungen der folgenden Figuren weist das Kochfeld 11 an der Unterseite 14 der Kochfeldplatte 12 auch ein Kochfeldgehäuse 17 auf, das einen umlaufenden Gehäuserand 18 aufweist. Darin ist in Fig. 2 beispielhaft eine Kochfeldsteuerung 20 enthalten. Ebenso sind darin die gestrichelt dargestellten Heizeinrichtungen 22 enthalten, von denen in Fig. 1 zwei Heizeinrichtungen 22 beispielhaft dargestellt sind. Sie können auch in größerer Anzahl und unterschiedlicher Ausbildung vorgesehen sein, hier gibt es keinerlei Beschränkungen durch die Erfindung. Ebenso sind eine Bedieneinrichtung und eine Anzeigeeinrichtung vorgesehen, wie dies für Kochfelder üblich ist.

In der Fig. 1 sind nahe der Ecken 16 vier Gewichtssensoren 24 beispielhaft dargestellt. Diese sind unterhalb der Kochfeldplatte 12 angeordnet und weisen jeweils einen Abstand von wenigen Zentimetern zu den Ecken 16 auf. An jeder Seite des Kochfelds 11 ist genau ein einziger solcher Gewichtssensor 24 vorgesehen. Gestrichelt dargestellt sind Gewichtssensoren 24', die alternative Positionen darstellen können oder aber zusätzlich vorgesehen sein können, beispielsweise zur Erhöhung der Genauigkeit einer Messung der Gewichtsbelastung auf der Kochfeldplatte 12.

An dem Kochfeld 11 bzw. entlang des Außenrands 15 der Kochfeldplatte 12 ist ein Rahmen 25 vorgesehen. Dieser besteht aus vier Rahmenteilen 26, nämlich dem vorderen Rahmenteil 26a und dem hinteren Rahmenteil 26b sowie dem linken Rahmenteil 26c und dem rechten Rahmenteil 26d. Diese Rahmenteile 26a bis 26d sind an den Ecken 16 vorteilhaft miteinander verbunden, besonders vorteilhaft dichtend verbunden. Sie können jeweils unterschiedliche Ausgestaltung aufweisen, wie im Folgenden dargelegt wird.

In der Fig. 2 ist in Schnittdarstellung eine Anordnung 40 eines Kochfelds 11 an einer Arbeitsplatte 41 dargestellt, welche wie üblich einen rechteckigen Ausschnitt 43 aufweist. Während die Kochfeldplatte 12 des Kochfelds 11 erkennbar oberhalb der Arbeitsplatte 41 und oberhalb einer Oberseite 42 der Arbeitsplatte 41 verläuft, befindet sich das vorgenannte Kochfeldgehäuse 17 weitgehend innerhalb dieses Ausschnitts 43.

Das Kochfeld 11 weist einen Rahmen auf, hier dargestellt durch ein Rahmenteil 26. Dieses Rahmenteil 26 steht seitlich weniger weit unterhalb der Kochfeldplatte 12 hervor bzw. in horizontaler Richtung über dieses über als es die Fig. 1 zeigt. Dennoch sollen wie bei der Fig. 1 auch vier solcher Rahmenteile 26 in der Fig. 2 vorgesehen sein, wobei jeweils ein Rahmenteil 26 entlang einer Längsseite der Kochfeldplatte 12 an deren Außenrand 15 verläuft.

Das Rahmenteil 26 ist vorteilhaft ein Profil aus Edelstahl oder Aluminium, beispielsweise mit einer Dicke von 0,2 mm bis 1 mm. Alternativ kann es auch aus Aluminium bestehen. Es kann gebogen oder durch Strangguss hergestellt sein. Das Rahmenteil 26 weist eine Rahmenaußenseite 27 auf, die nach außen hin sichtbar ist. Sie verbindet sozusagen einen oberen Rahmenschenkel 28 mit einem unteren Rahmenschenkel 31. Der obere Rahmenschenkel 28 verläuft parallel zur Unterseite 14 der Kochfeldplatte 12 und liegt daran an. Er ist mittels eines Klebestreifens 35, alternativ mittels einer Klebeschicht, beispielsweise mittels eines Klebers auf Silikonbasis, mit dieser Unterseite 14 verklebt. An seinem rechten äußeren und freien Ende ist ein Auflageabschnitt 30 vorgesehen, der in etwa rechtwinklig nach unten abgerichtet ist. Mittels dieses Auflageabschnitts 30 sind der obere Rahmenschenkel 28 und somit auch ein Teil des Gewichts der Kochfeldplatte 12 auf dem unteren Rahmenschenkel 31 ganz rechts abgestützt. Der Auflageabschnitt 30 liegt entweder sozusagen lose auf der Oberseite des unteren Rahmenschenkels 31 auf, alternativ kann auch eine einstückige und durchgängige Verbindung vorgesehen sein.

Der untere Rahmenschenkel 31 liegt auf der Oberseite 42 der Arbeitsplatte 41 auf. Er ist vorteilhaft ebenfalls daran festgeklebt, entweder durch einen Klebestreifen oder durch einen Kleber wie beispielsweise einen vorgenannten Silikonkleber. Während der obere Rahmenschenkel 28 durch einen links nach oben abstehenden Teil der Rahmenaußenseite 27 exakt an der Kochfeldplatte 12 positioniert ist, kann dies am unteren Rahmenschenkel 31 mittels eines nach unten stehenden Anschlags 32 am Ausschnitt 43 in der Arbeitsplatte 41 erfolgen. So ist eine passgenaue Montage möglich.

Der untere Rahmenschenkel 31 verläuft über den Anschlag 32 nach rechts bzw. hin zu einem Mittelbereich des Kochfelds 11. Kurz hinter dem von oben anliegenden Auflageabschnitt 30 ist der untere Rahmenschenkel 31 rechtwinklig nach unten abgebogen und geht in einen Rahmenschenkel 33 über, an dem das Kochfeldgehäuse 17 befestigt sein kann. Eine solche Befestigung kann ein Kleben oder ein Verschrauben bzw. eine sonstige lösbare Befestigung sein. Alternativ kann das Kochfeldgehäuse 17 anderweitig an der Kochfeldplatte 12 befestigt sein und an dem Rahmenschenkel 33 nur anliegen.

Das Rahmenteil 26 weist zwischen den beiden Rahmenschenkeln 28 und 31 einen flachen Hohlraum 37 auf. Dieser ist wichtig für die Bewegbarkeit bzw. dafür, dass sich der untere Rahmenschenkel 31 rechts nach unten biegen kann. Eine Abdichtung der Kochfeldplatte 12 gegen die Arbeitsplatte 41, insbesondere gegen Eindringen von Schmutz und Flüssigkeiten, ist durch den Klebestreifen 35 sowie die genannte Verklebung des unteren Rahmenschenkels 31 an der Oberseite 42 gewährleistet.

An der Unterseite des unteren Rahmenschenkels 31 ist in dem Bereich, in dem der Rahmenschenkel 31 über den Ausschnitt 43 nach innen steht und bevor er in den Rahmenschenkel 33 nach unten abgewinkelt ist, ein Gewichtssensor 24 angebracht, vorteilhaft fest angeklebt. Dieser Gewichtssensor 24 ist als Dehnmessstreifen ausgebildet, wie es eingangs ausführlich erläutert worden ist. Ändert sich die Gewichtsbelastung am Kochfeld 11 bzw. auf der Kochfeldplatte 12, beispielsweise weil ein Topf 45 entsprechend Fig. 1 hinten links über der entsprechenden Heizeinrichtung 22 aufgesetzt worden ist, so drückt die Kochfeldplatte 12 allgemein und vor allem in diesem Bereich aufgrund der erhöhten Gewichtsbelastung stärker nach unten. Diese erhöhte Gewichtsbelastung der Kochfeldplatte 12 wird über die Auflage auf dem oberen Rahmenschenkel 28 und dessen Auflageabschnitt 30 auf den rechten Bereich des unteren Rahmenschenkels 31 gegeben. Dieser verbiegt sich daraufhin etwas, insbesondere wird er in dem rechten Bereich, in dem der Gewichtssensor 24 gerade deswegen angeordnet ist und der frei über den Ausschnitt 43 übersteht, nach unten bzw. im Uhrzeigersinn verdreht bzw. verbogen. Damit verbiegt sich sozusagen auch der Gewichtssensor 24 bzw. seine Länge ändert sich, wie dies an sich bekannt ist. Durch die Ausgestaltung als Dehnmesstreifen, insbesondere als veränderlicher elektrischer Widerstand, kann die Veränderung des elektrischen Widerstands erfasst werden, und sie entspricht einer bestimmten Gewichtsbelastung bzw. veränderten Gewichtsbelastung. Somit kann in diesem Fall aus einer Veränderung des elektrischen Widerstands des Gewichtssensors 24 die Veränderung der Gewichtsbelastung auf der Kochfeldplatte bestimmt werden. Dies wird in jedem Fall immer für mehrere oder für alle Gewichtssensoren des Kochfelds 11 gemacht, insbesondere auch um die Gewichtsbelastung zu messen unabhängig von einer Position eines aufgesetzten Topfs 45. Dies ist aber bekannt für eine solche Messung einer Veränderung der Gewichtsbelastung. Damit kann also das Gewicht des aufgesetzten Topfs 45 bestimmt werden. Im weiteren Verlauf eines Kochens, insbesondere beim Ablauf eines automatischen Kochprogramms, kann auch eine Veränderung der Gewichtsbelastung beispielsweise durch verkochendes Wasser erfasst werden, wenn also der Topf 45 sozusagen leichter wird. Damit kann ein Kochvorgang automatisch gesteuert werden, wie dies dem Fachmann an sich bekannt ist.

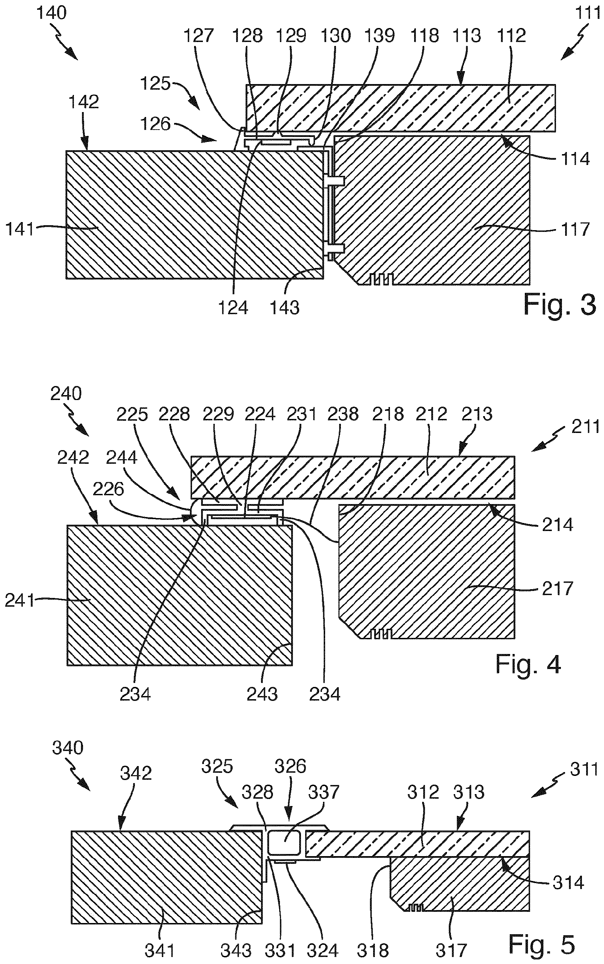

In der Fig. 3 ist ein weiteres Kochfeld 111 in einer Anordnung 140 an einer Arbeitsplatte 141 mit Oberseite 142 und einem Ausschnitt 143 dargestellt. Das Kochfeld 111 weist wiederum eine Kochfeldplatte 112 mit einer Oberseite 113, einer Unterseite 114 und einem Außenrand 115 auf. Die Kochfeldplatte 112 überragt den Ausschnitt 143 umlaufend, und in diesem Bereich befindet sich dazwischen ein Rahmen 25 mit einem Rahmenteil 126. Ganz offensichtlich ist bei Fig. 3 die Ausgestaltung des Rahmenteils 126 anders als bei Fig. 2. Das Rahmenteil 126 weist wiederum eine Rahmenaußenseite 127 auf, die etwas über die Unterseite 114 der Kochfeldplatte 112 nach oben übersteht und diese seitlich nach außen hält und begrenzt.

Das Rahmenteil 126 weist nur einen einzigen Rahmenschenkel 128 auf, der von der Rahmenaußenseite 127 nach rechts und somit in etwa in horizontaler Richtung abgeht. An der Oberseite des Rahmenschenkels 128 ist in etwa auf halber Länge ein nach oben stehender Druckabschnitt 129 vorgesehen. Dieser ist durch das Profil des Rahmenteils 126 gebildet. Er steht zwischen 0,1 mm und 1 mm über die Oberseite des Rahmenschenkels 128 über und liegt an der Unterseite 114 der Kochfeldplatte 112 an. Hier kann eine Verklebung vorgesehen sein für eine stabile Verbindung und für eine verbesserte Dichtheit, alternativ oder zusätzlich auch innen an der Rahmenaußenseite 127.

Am rechten Ende geht der Rahmenschenkel 128 in einen nach unten weisenden Auflageabschnitt 130 über gemäß der Darstellung der Fig. 2. Dieser Auflageabschnitt 130 liegt auf einem separaten Haltewinkel 139 auf, der mit einem schmalen Schenkel auf der Oberseite 142 der Arbeitsplatte 141 aufliegt. Der Haltewinkel 139 dient erkennbar dazu, das Kochfeldgehäuse 117 an der Arbeitsplatte 141 zu halten. Insofern ist es bei dieser Ausgestaltung des Kochfelds 111 wichtig, dass die Kochfeldplatte 112 sozusagen von dem Kochfeldgehäuse 117 entkoppelt ist bzw. sich die beiden Teile frei in der vertikalen Richtung gegeneinander bewegen können. Das Anliegen des Auflageabschnitts 130 auf dem einen Schenkel des Haltewinkels 139, der vorteilhaft aus Metall besteht, weist den Vorteil auf, dass er dann nicht in die Oberseite 142 der Arbeitsplatte 141 eingedrückt werden könnte.

Direkt unterhalb des Druckabschnitts 129 ist an einer Unterseite des Rahmenschenkels 128 ein Gewichtssensor 124 angeordnet, vorteilhaft wiederum als Dehnmesssensor bzw. Dehnmessstreifen. Bei zunehmender Gewichtsbelastung biegt sich der Rahmenschenkel 128 im Mittelbereich zwischen seinen beiden Enden nach unten, wodurch der Gewichtssensor 124 gelenkt wird. Dies kann leicht erfasst werden und in eine Änderung der Gewichtsbelastung umgerechnet werden, ähnlich wie dies zuvor beschrieben worden ist. Vorteilhaft ist der Rahmenteil 126 mit der Oberseite 142 der Arbeitsplatte 141 verklebt, insbesondere an der Unterseite der Rahmenaußenseite 127. So kann wiederum eine zuvor genannte Dichtigkeit erreicht werden. Die Anordnung des Gewichtssensors am Rahmen 125 bzw. an dem Rahmenteil 126 ermöglicht ja gerade eine solche Verklebung von Kochfeldplatte 112, Rahmenteil 126 und Arbeitsplatte 141 für eine Dichtigkeit.

In der Fig. 4 ist eine nochmals weitere Abwandlung eines Rahmens dargestellt an einem Kochfeld 211 mit einer Anordnung 240. Das Rahmenteil 226 ist hier wie auch zuvor zwischen Unterseite 214 der Kochfeldplatte 212 und Oberseite 242 der Arbeitsplatte 241 angeordnet, und zwar umlaufend um den Ausschnitt 243. Das Rahmenteil 226 weist einen oberen Rahmenschenkel 228 und einen unteren Rahmenschenkel 231 auf, die parallel zueinander ausgebildet sind. Sie weisen einen geringen Abstand zueinander auf, der von einem Druckabschnitt 229 des Profils gebildet ist. Der obere Rahmenschenkel 228 liegt mit seiner Oberseite sozusagen vollflächig an der Unterseite 214 an, vorteilhaft ist hier eine Verklebung vorgesehen. Der untere Rahmenschenkel 231 weist an seinem linken Ende und an seinem rechten Ende jeweils Auflagen 234 auf, die nach unten abgebogen sind. Diese Auflagen 234 liegen auf der Oberseite 242 der Arbeitsplatte 241 auf, vorteilhaft sind sie dort verklebt für eine Dichtigkeit. Alternativ kann eine Dichtigkeit vor allem durch einen Dichtstreifen 244 erreicht werden, der außerhalb des Rahmenteils 226 zwischen Unterseite 214 der Kochfeldplatte 212 und Oberseite 242 der Arbeitspatte 241 verläuft. Er besteht vorteilhaft aus dünnem und sehr elastischem Material, beispielsweise Silikon, was eine Messung einer Veränderung der Gewichtsbelastung auf der Kochfeldplatte 212 nicht verfälscht.

Direkt unterhalb des Druckabschnitts 229 ist an der Unterseite des unteren Rahmenschenkels 231 ein Gewichtssensor 224 vorgesehen, insbesondere festgeklebt. Der Gewichtssensor 224 ist vorteilhaft auch wieder als Dehnmessstreifen ausgebildet. Mit zunehmender Gewichtsbelastung auf der Kochfeldplatte 212 drückt diese über den Druckabschnitt 229 auf den unteren Rahmenschenkel 231. Weil dieser außen mittels der Auflagen 234 auf der Arbeitsplatte 241 aufliegt, biegt er sich in der Mitte durch, wodurch der Gewichtssensor 224 eine Längenveränderung erfährt bzw. verlängert wird. Damit ändern sich seine elektrischen Eigenschaften. Dies kann auf bekannte Art und Weise erfasst werden. Hierfür ist beispielhaft ein Anschlusskabel 238 vom Gewichtssensor 229 in das Kochfeldgehäuse 217 hinein dargestellt. Vorteilhaft verläuft das Anschlusskabel 238 dort hin zu einer nicht dargestellten Kochfeldsteuerung entsprechend Fig. 2, wo die Sensorsignale auswertet werden und eine Berechnung der Gewichtsbelastung bzw. der Veränderung der Gewichtsbelastung erfolgt.

Bei dem Kochfeld 211 ist das Kochfeldgehäuse 217 fest an der Kochfeldplatte 212 befestigt, insbesondere an deren Unterseite 214. Zur Montage des Kochfelds 211 an der Arbeitsplatte 241 muss nur eine Verklebung der Auflagen 234 nach unten zur Oberseite 242 der Arbeitsplatte 241 erfolgen.

Der Gewichtssensor 224 ist nur als Streifen ausgebildet und in Richtung in die Zeichenebene hinein beispielsweise nur 5 mm bis 10 mm oder bis 20 mm lang. An sich ist das Rahmenteil 226 aber als durchgehendes Profil ausgebildet, so dass die Durchbiegung des unteren Rahmenschenkels 231 nur im Bereich des Gewichtssensors 224 von diesem gemessen wird. Dies wird aber als ausreichend angesehen für eine ausreichend genaue Messung.

In der Fig. 5 ist eine nochmals weitere Anordnung 340 eines Kochfelds 311 an einer Arbeitsplatte 341 dargestellt. Der wesentliche Unterschied zu den vorherigen Ausgestaltungen liegt hier darin, dass die Kochfeldplatte 312 des Kochfelds 311 eine kleinere Fläche aufweist als der Ausschnitt 343 und das Kochfeld 311 sozusagen versenkt eingebaut ist bzw. oberflächenbündig ist. Die Oberseite 313 der Kochfeldplatte 312 liegt somit in einer Ebene mit der Oberseite 342 der Arbeitsplatte 341. Somit kann die Kochfeldplatte 312 auch nicht auf dieser Oberseite 342 in direkter Linie aufliegen. Zur Halterung der Kochfeldplatte 312 des Kochfelds 311 an der Arbeitsplatte 341 ist ein Rahmen 325 mit einem hier im Schnitt dargestellten Rahmenteil 326 vorgesehen, der um die Kochfeldplatte 312 umlaufend ausgebildet ist. Das Rahmenteil 326 weist einen großen Hohlraum 337 auf, der oben von einem oberen Rahmenschenkel 328 begrenzt ist. Der Rahmenschenkel 328 liegt jeweils links auf der Oberseite 342 der Arbeitsplatte 341 auf und rechts auf der Oberseite 313 der Kochfeldplatte 312 auf. Die Überlappung kann 5 mm bis 10 mm oder sogar bis 20 mm betragen.

Nach unten wird der Hohlraum 337 von einem unteren Rahmenschenkel 331 begrenzt. Der untere Rahmenschenkel 331 verläuft unter die Kochfeldplatte 312 und liegt an deren Unterseite 314 an entlang eines Streifens mit etwa 5 mm bis 10 mm Breite. Davon wird die Kochfeldplatte 312 getragen.

Der obere Rahmenschenkel 328 und der untere Rahmenschenkel 331 sind durch Verbindungsbereiche miteinander verbunden, die den Hohlraum 337 nach links und nach rechts begrenzen. Der linke Verbindungsbereich zieht sich noch ein Stück unterhalb des unteren Rahmenschenkels 331 und liegt dabei am Innenrand des Ausschnitts 343 an.

Das Rahmenteil 326 ist vorteilhaft an der Kochfeldplatte 312 bzw. an deren Außenrand 315 festgeklebt. Ebenso ist es bei Einbau des Kochfelds 311 auch an der Arbeitsplatte 341 festgeklebt für eine gute Dichtigkeit.

An der Unterseite des unteren Rahmenschenkels 331 ist ein Gewichtssensor 324 befestigt oder festgeklebt, vorteilhaft als Dehnmessstreifen. Der Gewichtssensor 324 als Dehnmessstreifen wird mit Änderung der Gewichtsbelastung auf der Kochfeldplatte 312 verformt. Bei zunehmender Gewichtsbelastung verbiegt sich der untere Rahmenschenkel 331 derart, dass er im rechten Bereich nach unten gebogen wird durch die Auflage der Kochfeldpatte 312 ganz rechts, wodurch der daran befestigte Gewichtssensor 324 sozusagen verkürzt oder gestaucht wird. Auch dies kann, wie zuvor beschrieben worden ist, mit einem Dehnmessstreifen erfasst werden.

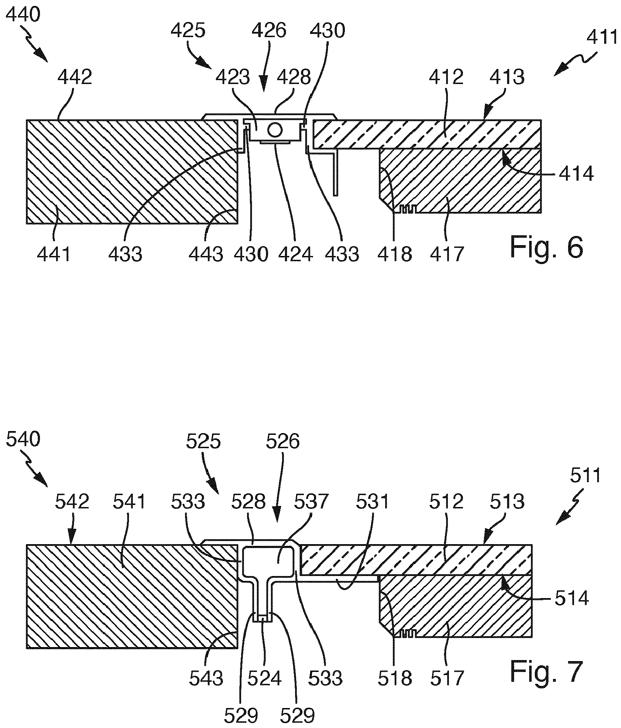

In der Fig. 6 ist eine weitere erfindungsgemäße Anordnung 440 eines Kochfelds 411 an einer Arbeitsplatte 441 dargestellt. Auch hier ist die Kochfeldplatte 412 innerhalb des Ausschnitts 443, ist also kleiner, so dass auch die Oberseite 413 der Kochfeldplatte 412 in einer Ebene mit der Oberseite 442 der Arbeitsplatte 441 verläuft. Das Kochfeldgehäuse 417 ist an der Unterseite 414 der Kochfeldpatte 412 befestigt. Die Kochfeldplatte 412 wird dabei umgeben von einem Rahmen 425, von dem ein Rahmenschenkel 426 im Schnitt dargestellt ist. Der Rahmenschenkel 426 hält auch wiederum das Kochfeld 411 an der Arbeitsplatte 441. Das Rahmenteil 426 weist einen oberen Rahmenschenkel 428 auf, der ähnlich wie in Fig. 5 links über die Oberseite 442 der Arbeitsplatte 441 überlappt und rechts über die Oberseite 413 der Kochfeldplatte 412. Vorteilhaft ist er dort festgeklebt, insbesondere auch an der Kochfeldplatte 412. Von dem oberen Rahmenschenkel 428 geht links ein linker Rahmenschenkel 433 nach unten ab und liegt an der Innenseite des Ausschnitts 443 an. In etwa spiegelsymmetrisch geht rechts ein rechter Rahmenschenkel 433 nach unten ab parallel zum Außenrand 415 der Kochfeldplatte 412. Beide Rahmenschenkel 433 weisen kurz unterhalb des oberen Rahmenschenkels 428 nach innen zeigende Auflageabschnitte 430 auf, die beispielsweise 2 mm bis 5 mm lang sind in Richtung aufeinander zu. Die Rahmenschenkel 433 halten zwischen sich einen Träger 423, an dessen Unterseite ein Gewichtssensor 424 angeklebt ist. Der Träger 423 ist mit seiner Form so angepasst, dass er oben fest von den Auflageabschnitten 430 und dem oberen Rahmenschenkel 428 gehalten wird. Der Träger 423 ist vorteilhaft in Richtung in die Zeichenebene hinein nur wenig breiter als der Gewichtssensor 424 in dieser Richtung. Er kann an dem Rahmenteil 426 festgeklebt sein, damit er seine Position nicht ändern kann.

Verändert sich eine Gewichtsbelastung auf der Kochfeldplatte 412, wird sie also beispielsweise größer durch Aufstellen eines Topfes, so verdreht sich das Rahmenteil 426 von der Auflage an der Arbeitsplatte 441 aus nach rechts bzw. im Uhrzeigersinn. Der rechte Teil des Rahmenschenkels 426 wird also nach unten gedrückt. Dies wird auf den Träger 423 und somit auch auf den Gewichtssensor 424 übertragen, der sich dann in seiner Länge verändert bzw. verkürzt oder gestaucht wird. Daraus kann wieder wie zuvor beschrieben diese Veränderung der Gewichtsbelastung rechnerisch bestimmt werden.

Das Rahmenteil 426 ist an den rechten Rahmenschenkel 433 anschließend einmal nach rechts gebogen, so dass die Kochfeldplatte 412 hier aufliegen kann und getragen wird. Daran anschließend ist der Rahmenschenkel 433 wieder in etwa rechtwinklig nach unten abgebogen, was beispielsweise zur Befestigung eines Kochfeldgehäuses 417 dienen kann, alternativ zur Führung eines hier nicht dargestellten Anschlusskabels vom Gewichtssensor 424 an eine Kochfeldsteuerung.

In der Fig. 7 ist eine weitere mögliche Anordnung 540 eines Kochfelds 511 an einer Arbeitsplatte 541 dargestellt. Auch hier liegt wieder eine flächenbündige Ausgestaltung vor, wobei die Kochfeldplatte 512 mittels eines Rahmenteils 526 eines Rahmens 525 mit der Arbeitsplatte 541 verbunden ist und daran befestigt ist. Das Rahmenteil 526 weist einen oberen Rahmenschenkel 528 auf, der in seinem linken Bereich auf der Oberseite 542 der Arbeitsplatte 541 aufliegt. Vorteilhaft ist er hier verklebt. Der obere Rahmenschenkel 528 begrenzt einen Hohlraum 537 nach oben. Nach links wird dieser Hohlraum 537 von einem Rahmenschenkel 533 begrenzt, der innen an dem Ausschnitt 543 anliegt und mit einer S-artigen zweifachen gegenläufigen Abwinklung in einem nach unten weisenden linken Druckabschnitt 529 endet. Nach rechts wird der Hohlraum 537 von einem rechten Rahmenschenkel 533 begrenzt, der ebenfalls zweifach abgewinkelt ist und nach unten in einen nach unten weisenden rechten Druckabschnitt 529 mündet. Ein unterer Rahmenschenkel 531 erstreckt sich horizontal nach rechts und ist mit der Unterseite 514 der Kochfeldplatte 512 verklebt. Das Rahmenteil 526 überlappt somit nicht die Oberseite 513 der Kochfeldplatte 512.

Die beiden Druckabschnitte 529 weisen einen Abstand von einigen Millimetern zueinander auf, beispielsweise 2 mm bis 5 mm, und in dem Bereich dazwischen ist ein Gewichtssensor 524 angeordnet, vorteilhaft festgeklebt. Dieser Gewichtssensor 524 ist anders als die anderen Gewichtssensoren nicht als Dehnmessstreifen ausgebildet, sondern als auf Druck reagierender Sensor, beispielsweise als Piezo-Sensor bzw. aus Piezokeramik bestehend. Nimmt die Gewichtsbelastung auf der Kochfeldplatte 512 zu, so verdreht sich das Rahmenteil 526 von der Auflage des linken oberen Rahmenschenkels 528 auf der Arbeitsplatte 541 nach rechts, wodurch der rechte Druckabschnitt 529 stärker gegen den linken Druckabschnitt 529 gedrückt wird. Zur präziseren Messung kann dieser linke Druckabschnitt 529 noch mit einem nach links abstehenden Abschnitt an der Innenseite des Ausschnitts 543 angelegt sein, also sozusagen unbeweglich sein. Ein zunehmender Druck kann von dem Gewichtssensor 524 auf relativ präzise Art und Weise erfasst werden, wodurch eine Veränderung einer Gewichtsbelastung gemessen werden kann als vorgenannte Wiegefunktion. Durch diese spezielle Konstruktion des Rahmenteils 526 und seine innere Bewegbarkeit bzw. Flexibilität kann also auch eine andere Art von Gewichtssensor verwendet werden, um die erfindungsgemäße Veränderung der Gewichtsbelastung auf dem Kochfeld zu messen.

## Patentansprüche

1. Kochfeld mit:
- einer Kochfeldplatte mit einem umlaufenden Außenrand,
- mehreren Heizeinrichtungen unter der Kochfeldplatte,
- einem Kochfeldgehäuse unter der Kochfeldplatte mit einer Kochfeldsteuerung und einer Leistungsversorgung für die Kochfeldsteuerung und die Heizeinrichtungen darin,
- einem Rahmen an dem Außenrand der Kochfeldplatte, wobei der Rahmen zur Verbindung mit einer Arbeitsplatte ausgebildet ist bei Anordnung des Kochfelds in der Arbeitsplatte,
**dadurch gekennzeichnet, dass**:
- an dem Rahmen mehrere Gewichtssensoren angeordnet sind, vorzugsweise Dehnmesssensoren,
- die Gewichtssensoren zur Messung einer Veränderung der Gewichtsbelastung auf dem Kochfeld bzw. auf der Kochfeldplatte ausgebildet sind.

2. Kochfeld nach Anspruch 1, **dadurch gekennzeichnet, dass** die Kochfeldplatte rechteckig ist und insgesamt mindestens drei oder vier Gewichtssensoren aufweist, wobei das Kochfeld vorzugsweise pro Längsseite des Außenrands der Kochfeldplatte genau einen einzigen Gewichtssensor aufweist.

3. Kochfeld nach Anspruch 1 oder 2, **dadurch gekennzeichnet, dass** mindestens vier Gewichtssensoren, vorzugsweise alle Gewichtssensoren, einen Abstand von weniger als 10 cm zu einer Ecke der Kochfeldplatte aufweisen, vorzugsweise von weniger als 5 cm.

4. Kochfeld nach einem der vorhergehenden Ansprüche, **dadurch gekennzeichnet, dass** der Rahmen im Wesentlichen aus Metall besteht und/oder dass der Rahmen Rahmenteile aus Metall aufweist, die parallel zum Außenrand der Kochfeldplatte verlaufen.

5. Kochfeld nach einem der vorhergehenden Ansprüche, **dadurch gekennzeichnet, dass** der Rahmen oder Rahmenteile für den Rahmen als Profile ausgebildet sind, insbesondere als Profile mit mindestens einer Abwinklung, wobei insbesondere die Abwinklungen einen Winkel zwischen 80° und 100° aufweisen, vorzugsweise einen Winkel von 90° aufweisen.

6. Kochfeld nach einem der vorhergehenden Ansprüche, **dadurch gekennzeichnet, dass** entlang jeder Seite des Außenrands der Kochfeldplatte ein Rahmenteil des Rahmens verläuft, vorzugsweise pro Seite des Außenrands jeweils nur ein einziges Rahmenteil, wobei insbesondere sämtliche Rahmenteile ein identisches Profil aufweisen, wobei vorzugsweise die Rahmenteile bzw. Profile parallel zu dem Außenrand der Kochfeldplatte verlaufen.

7. Kochfeld nach einem der Ansprüche 4 bis 6, **dadurch gekennzeichnet, dass** die mehreren Rahmenteile in Eckbereichen der Kochfeldplatte miteinander verbunden sind, insbesondere dichtend miteinander verbunden sind und/oder mechanisch fest miteinander verbunden sind.

8. Kochfeld nach einem der vorhergehenden Ansprüche, **dadurch gekennzeichnet, dass** mindestens ein Gewichtssensor, vorzugsweise alle Gewichtssensoren, als Dehnmessstreifen ausgebildet ist und an einem Bereich eines Rahmenteils, insbesondere an einem Rahmenschenkel, angeordnet ist, der sich bei zunehmender Gewichtsbelastung auf dem Kochfeld derart verformt bzw. durchbiegt, dass sich der Dehnmessstreifen verlängert, wobei vorzugsweise der Gewichtssensor an einem Sensorträger befestigt ist, wobei der Sensorträger derart an dem Rahmen befestigt ist, dass er sich bei Änderung der Gewichtsbelastung auf dem Kochfeld verformt und damit auch der Gewichtssensor verformt.

9. Kochfeld nach einem der Ansprüche 1 bis 7, **dadurch gekennzeichnet, dass** mindestens ein Gewichtssensor, vorzugsweise alle Gewichtssensoren, derart ausgebildet ist, dass er ausschließlich auf Druck misst, wobei insbesondere der Gewichtssensor entweder in vertikaler Erstreckung zwischen Unterseite der Kochfeldplatte und Rahmen oder zwischen Oberseite der Arbeitsplatte und Rahmen oder aber zwischen zwei beabstandeten Rahmenschenkeln angeordnet ist, die derart ausgebildet sind, dass sich ihr Abstand bei zunehmender Gewichtsbelastung auf dem Kochfeld bzw. auf der Kochfeldplatte verringert.

10. Anordnung eines Kochfelds nach einem der vorhergehenden Ansprüche an einer Arbeitsplatte, wobei ein Ausschnitt in der Arbeitsplatte vorgesehen ist und das Kochfeld derart an dem Ausschnitt an der Arbeitsplatte angeordnet ist, dass das Kochfeldgehäuse in den Ausschnitt hineinragt, wobei der Rahmen zwischen der Kochfeldplatte und der Arbeitsplatte vorgesehen ist bzw. der Rahmen zwischen der Kochfeldplatte und der Arbeitsplatte verläuft derart, dass die Kochfeldplatte einen Abstand von mindestens 1 mm zu der Arbeitsplatte aufweist.

11. Anordnung nach Anspruch 10, **dadurch gekennzeichnet, dass** die Kochfeldplatte oberhalb einer Oberseite der Arbeitsplatte verläuft und außen um den Ausschnitt herum über der Oberseite verläuft, wobei der Rahmen mindestens bereichsweise unterhalb der Kochfeldplatte und zwischen der Unterseite der Kochfeldplatte und der Oberseite der Arbeitsplatte angeordnet ist.

12. Anordnung nach Anspruch 11, **dadurch gekennzeichnet, dass** die Gewichtssensoren in vertikaler Richtung oberhalb der Oberseite der Arbeitsplatte und unterhalb der Unterseite der Kochfeldplatte angeordnet sind, vorzugsweise sämtliche Gewichtssensoren.

13. Anordnung nach Anspruch 11, **dadurch gekennzeichnet, dass** die Gewichtssensoren in vertikaler Richtung unterhalb der Unterseite der Kochfeldplatte und oberhalb oder innerhalb des Ausschnitts in der Arbeitsplatte angeordnet sind.

14. Anordnung nach einem der Ansprüche 11 bis 13, **dadurch gekennzeichnet, dass** das Kochfeldgehäuse entweder an der Unterseite der Kochfeldplatte befestigt ist und vollständig von dieser getragen wird oder an der Arbeitsplatte befestigt ist und von dieser getragen ist.

15. Anordnung nach Anspruch 10, **dadurch gekennzeichnet, dass** die Fläche der Kochfeldplatte kleiner ist als die Fläche des Ausschnitts und die Kochfeldplatte innerhalb des Ausschnitts in der Arbeitsplatte angeordnet ist, wobei vorzugsweise eine Unterseite der Kochfeldplatte unterhalb der Oberseite der Arbeitsplatte verläuft, wobei die Kochfeldplatte ausschließlich mittels des Rahmens an der Arbeitsplatte gehalten ist, wobei insbesondere der Rahmen vollständig um die Kochfeldplatte umläuft und einen Abstand zwischen dem Außenrand der Kochfeldplatte und einem Innenrand des Ausschnitts verschließt.
